Europäisches Patentamt

European Patent Office

Office européen des brevets

(11) Publication number: **0 446 184 A1**

## EUROPEAN PATENT APPLICATION

(21) Application number: **91830063.3**

(22) Date of filing: **26.02.91**

(51) Int. Cl.5: **H02P 9/30**

(30) Priority: **07.03.90 IT 6716190**

(43) Date of publication of application:
**11.09.91 Bulletin 91/37**

(84) Designated Contracting States:
**DE ES FR GB IT SE**

(71) Applicant: **INDUSTRIE MAGNETI MARELLI S.p.A.**
**Via Adriano 81**
**I-20128 Milano(IT)**

(72) Inventor: **Cerizza, Giovanni**
**Corso Mazzini 45**
**I-20076 Lodi (Milano)(IT)**

(74) Representative: **Quinterno, Giuseppe et al**
**c/o Jacobacci-Casetta & Perani S.p.A. Via Alfieri, 17**
**I-10121 Torino(IT)**

(54) **An electrical system for a motor vehicle with a device for defrosting the windscreen and/or the rear window.**

(57) The system includes an alternator (G) with an armature winding divided into two half-windings (1,2) which can be interconnected selectively in series or in parallel.

In order to defrost the windscreen and/or the rear window, a switch (14) disconnects the output of the generator (G,9) from the battery (10) and from the other electrical loads (L) of the motor vehicle and connects the generator (G,9) to a low resistance resistive heating element (R) incorporated in the windscreen and/or in the rear window. Moreover, a control circuit (CC) acts on a device (16) for regulating the idling speed of the engine to raise that speed at least to a predetermined value and then interconnects the two half-windings (1,2) of the alternator (G) in series.

The control circuit (CC) raises the reference voltage of the regulator (S) and can also increase the field current in the alternator (G).

The present invention relates to an electrical system for a motor vehicle comprising

a) a storage battery,

b) a generator including

- an alternator with a field winding and an armature winding connected to full-wave rectifier means, and

- a voltage regulator arranged to modify the excitation of the alternator to limit the swing of the voltage generated about a predetermined reference value; and

c) an electrical heating device for defrosting the windscreen and/or the rear window, comprising

- a resistive element incorporated in the windscreen and/or the rear window,

- a temperature sensor associated with the windscreen and/or the rear window; and

- a manually-operated control device and circuit control means which are arranged, when the manual control is operated, to disconnect the generator output from the battery and from the other electrical devices or loads of the motor vehicle and to connect the generator output to the resistive element, and to cause current to be supplied to the resistive element in a predetermined manner in dependence on the temperature detected by the sensor.

An electrical system of the type indicated above is described in Italian patent application No. 67911-A/89 in the name of the same Applicant.

The object of the present invention is to provide an electrical system of the type specified above, which is arranged to enable the power levels necessary for the good operation of the windscreen-and/or rear window-defrosting device to be reached quickly and easily.

This object is achieved according to the invention by means of an electrical system of the type specified above, whose main characteristics lie in the fact that:

- the armature winding of the alternator is divided into two half-windings each connected to the input terminals of a respective full-wave rectifier circuit;

- the circuit control means are connected to an electrical sensor for sensing the rate of rotation of the engine or of the alternator of the motor vehicle, to a device for regulating the idling speed of the engine, and to bistable switching means for connecting the half-windings selectively in series or in parallel; and in that

- when the manual control device is operated, the circuit control means are also arranged to cause:

i) the idling speed of the motor-vehicle engine to rise to a predetermined rate of rotation; and

ii) the activation of the switching means to interconnect the half-windings of the generator in parallel.

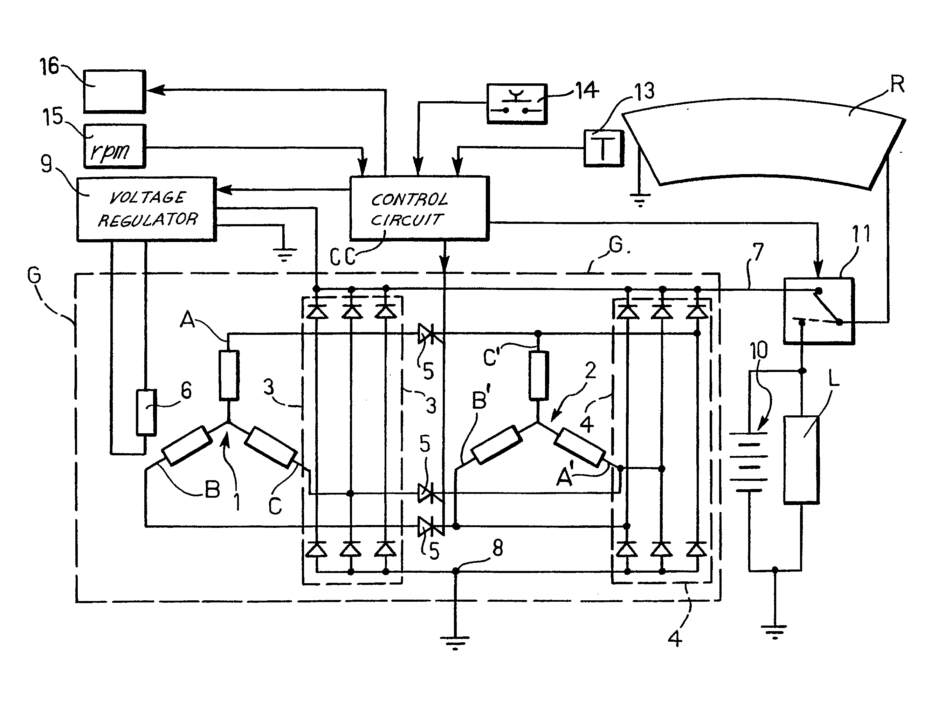

Further characteristics and advantages of the invention will become clear from the detailed description which follows, with reference to the appended drawing, provided purely by way of non-limiting example, which shows an electrical circuit of a system according to the invention for motor vehicles.

With reference to the drawing, a motor-vehicle electrical system according to the invention includes an electrical generator generally indicated G. The generator comprises an alternator of the type described, for example, in German Patent No. P3227602 with two three-phase, star-connected armature half-windings 1 and 2.

The respective terminals A, B, C and A', B', C' of the two armature half-windings are connected respectively to the input terminals of first and second Graetz-bridge rectifier circuits 3, 4 connected in parallel with each other between two terminals 7 and 8.

Three thyristors, SCRs or other switches are indicated 5 and each has its anode connected to a terminal of the first half-winding 1 and its cathode connected to a terminal of the other half winding 2. The gate electrodes of the thyristors 5 are connected to an electronic control circuit CC.

The alternator also includes a field winding 6 connected to the output of a voltage regulator 9 of known type. This regulator is connected to the output terminal 7 of the generator and, in operation, monitors the direct-current voltage output by the generator and regulates the excitation current supplied to the field winding 6 so as to limit the swing of the generated voltage about a predetermined reference value.

The terminals 7 and 8 of the generator G are connected to a switch 11 and to earth respectively. The switch 11 is also connected to the positive pole of the vehicle's battery 10.

The system further includes a resistive heating element R constituted, for example, by a conductive strip with a low resistance (2-3 ohms) incorporated, in known manner, in the windscreen and/or in the rear window of the motor vehicle. This resistive element is connected between the switch 11 and earth.

The switching device 11 may be constituted by a relay or by a solid-state device and can normally assume a first condition in which it connects the output terminal 7 of the generator to the battery 10 and disconnects the resistive heater element R from the generator. When the switching device 11 receives a control signal from the control circuit CC, it switches to another condition (shown by a broken line in the drawing) in which it connects the resistive element R to the output 7 of the generator G and disconnects the battery 10 (and the other electrical devices or loads L of the motor vehicle) from the generator.

An electrical temperature sensor, indicated 13, is associated with the windscreen or rear window of the motor vehicle and is connected to the control circuit CC.

A manually-operated control device, indicated 14, is intended to switch on the heating device associated with the windscreen or rear window.

A sensor, indicated 15, is arranged to provide the control circuit CC with electrical signals indicative of the rate of rotation (number of revolutions per unit of time) of the vehicle engine.

Finally, a device for regulating the idling speed of the vehicle engine is indicated 16. This regulating device, which may, for example, form part of the fuel-injection control system, is also connected to the control circuit CC.

When the control 14 is operated, the control circuit CC is arranged to modify the reference voltage of the regulator 9 changing it, for example, from 12-14V to 65-70V. Consequently, a greater excitation current is supplied to the winding 3 so that the average direct-current voltage output by the generator 4 is correspondingly higher. The regulator 9 then regulates the field current so as to limit the swing of the direct-current voltage generated about the new reference value set by the control circuit 12.

In use, the heating device R is switched on by the user, with the engine running, by means of the control 14 which may, for example, be a switch operable by means of a push-button on the instrument panel of the motor vehicle. The control circuit CC consequently switches the device 11 so as to connect the resistive element R to the output of the generator G. At the same time, the control circuit CC increases the reference voltage of the voltage regulator 9.

The control circuit CC checks whether the internal combustion engine of the motor vehicle is operating at a rate of revolution below a predetermined value (for example 1500 revolutions/minute). If this is the case, the control circuit increases the rate of rotation of the motor-vehicle engine, by means of the regulating device 16, so that the rate of rotation reaches the predetermined value.

As long as the rate of rotation of the engine is below the predetermined value, the control circuit CC keeps the thyristors or SCRs 5 conductive so that the half-windings 1, 2 of the generator are interconnected in series.

As soon as the rate of rotation of the engine equals or exceeds the predetermined value, the thyristors 5 are switched off and the half-windings 1, 2 of the alternator are interconnected in parallel so as to be equivalent to a single winding with a smaller number of turns. As explained in detail in German patent No. P3227602, this enables a greater current to be supplied by the generator. This is particularly convenient for enabling considerable power (of the order of 1KW or more) to be supplied to the resistive heating element R to enable even a thick layer of ice which has formed on the windscreen or rear window of the vehicle to be melted quite quickly, even at very cold temperatures.

If the user operates the control device 14 in order to defrost the windscreen and/or the rear window whilst the vehicle is in motion, the control circuit CC checks the signals supplied to it by the sensor 15 to determine whether the rate of rotation of the engine is at least equal to the predetermined value: if this is the case, it is not necessary for the control circuit CC to activate the device 16 for regulating the idling speed.

When the temperature sensor 13 senses that the windscreen has reached a predetermined temperature, the control circuit CC switches the device 11 back to its normal condition (shown by a continuous line in the drawing) and resets the normal reference voltage for the regulator 9.

Naturally, the principle of the invention remaining the same, the forms of embodiment and details of construction may be varied widely with respect to those described and illustrated purely by way of non-limiting example, without thereby departing from the scope of the present invention.

## Claims

1. An electrical system for a motor vehicle, comprising

   a) a storage battery (10),

   b) a generator (G, 9) including

   - an alternator (G) with a field winding (6) and an armature winding (1, 2) connected to full-wave rectifier means (3, 4), and

   - a voltage regulator (9) arranged to modify the excitation of the alternator (G) to limit the swing of the voltage generated about a predetermined reference value;

   c) an electrical heating device (R, 11-16, CC) for defrosting the windscreen and/or the rear window of the motor vehicle, comprising

   - a resistive element (R) incorporated in the windscreen and/or the rear window,

   - a temperature sensor (13) associated with the windscreen and/or the rear window, and

   - a manually-operated control device (14) and circuit control means (CC, 11) which are arranged, when the manual control (14) is operated, to disconnect the generator output (G, 9) from the battery (10) and from the other electrical devices or loads (L) of the motor vehicle and to connect the output of the generator (G, 9) to the resistive element (R) and to cause current to be supplied to the resistive element (R) in a predetermined manner in dependence on the temperature detected by the sensor (13); characterised in that

- the armature winding of the alternator (G) is divided into two half-windings (1, 2) each connected to the input terminals of a respective full-wave rectifier circuit (3, 4);

- the circuit control means (CC, 11) are connected to an electrical sensor (15) for sensing the rate of rotation of the engine of the motor vehicle, to a device (16) for regulating the idling speed of the engine, and to bistable switching means (5) for connecting the half-windings (1, 2) selectively in series or in parallel; and in that

- when the manual control device (14) is operated, the circuit control means (CC, 11) are also arranged to cause:
i) the idling speed of the engine to rise to a predetermined rate of rotation; and
ii) the activation of the switching means (5) to interconnect the half-windings (1, 2) of the generator (G, 9) in parallel.

2. An electrical system for a motor vehicle according to Claim 1, characterised in that the circuit control means (CC, 11) are arranged, when the manual control device (14) is operated, to increase the reference voltage of the regulator (9) so as to increase the field current in the alternator (G) and raise the average voltage supplied by the generator (G, 9) correspondingly.

3. An electrical system for a motor vehicle according to Claim 1 or Claim 2, characterised in that the circuit control means (CC, 11) are arranged to de-energise the alternator (G) before the switching of the switching device (11).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | DE-A-3 227 602 (MARELLI AUTRONICA SPA)<br>* abstract; figure 3 * | 1 | H 02 P 9/30 |
| A | US-A-3 984 750 (P. PFEFFER ET AL)<br>* abstract; figure 1 * * column 4, lines 2 - 9 * | 1 | |
| A | US-A-4 024 456 (S. SATO ET AL)<br>* abstract; claim 2 * | 1 | |
| A | US-A-4 661 761 (M. KATSUMATA)<br>* abstract; figure 4 * | 1 | |
| A | EP-A-0 338 926 (EQUIPEMENTS ELECTRIQUES MOTEUR)<br>* abstract; figure 1a * | 1 | |
| A | US-A-4 862 055 (T. MARUYAMA ET AL)<br>* column 4, lines 47 - 58; figure 1 * | 1 | |

| | | | TECHNICAL FIELDS SEARCHED (Int. Cl.5) |
|---|---|---|---|
| | | | H 02 P<br>H 02 J |

The present search report has been drawn up for all claims

| Place of search | Date of completion of search | Examiner |
|---|---|---|
| The Hague | 15 May 91 | BEYER F. |

CATEGORY OF CITED DOCUMENTS
X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document